# EUROPÄISCHE PATENTSCHRIFT

(11) **EP 0 367 846 B1**
(45) Veröffentlichungstag und Bekanntmachung des Hinweises auf die Patenterteilung: **03.02.1993**
(21) Anmeldenummer: 88118521.9
(22) Anmeldetag: 07.11.1988
(51) Int. Cl.: H02K 7/14, F04D 29/60, F04B 35/04

(54) **Pumpenaggregat**
Pump set
Groupe de pompe

(43) Veröffentlichungstag der Anmeldung: 16.05.1990
(73) Patentinhaber: SIEMENS AKTIENGESELLSCHAFT, 80333 München (DE)
(72) Erfinder: Breyer, Eberhard, D-8740 Bad Neustadt/S (DE); Schönwald, Siegfried, Dipl.-Ing., D-8740 Bad Neustadt/S (DE); Trojahn, Hans-Georg, Dipl.-Ing., D-8741 Saal (DE)

(56) Entgegenhaltungen:
- WO-A-88/04366
- DE-C- 850 486
- DE-U- 8 237 196

## Beschreibung

Die Erfindung betrifft ein Pumpenaggregat gemäß dem Oberbegriff des Anspruches 1.

Ein solches Pumpenaggregat ist aus der Zeitschrift "Siemens Energietechnik 7 (1985) Sonderheft Pumpen und Verdichter", Seiten 6-8 bekannt. Bei diesem Aggregat ist die Pumpe mit ihrem Gehäuse an dem Gehäuse ihres Antriebsmotors angeflanscht und wird von diesem getragen. Zur Befestigung des Aggregates am Aufstellort sind lediglich am Motorgehäuse vier Füße mit entsprechenden Befestigungslöchern vorgesehen. Wird bei einem solchen Aggregat das Pumpengehäuse durch äußere Kräfte, z.B. durch das Gewicht der Anschlußrohre zusätzlich belastet, so können hierdurch so hohe Biegespannungen auftreten, daß es wegen der engen Betriebsspalte zwischen dem Laufrad der Pumpe und den entsprechenden Gehäusestellen zu einem Schleifen des Laufrades kommt.

Durch die DE-C-850 486 ist eine Antriebsanordnung bekannt, bei der ein aus einem Motor und einem an diesem angeflanschten Getriebe bestehendes Antriebsaggregat auf dem Wellenende einer anzutreibenden Maschine gelagert ist. Um bei einer solchen Zuordnung von Antriebsaggregat und Maschine ein gewichtsbedingtes Vorschwenken des Antriebsaggregates um das horizontale Wellenende der Maschine zu verhindern, ist eine dieser Verschwenkung entgegenwirkende, an einem Punkt in Umfangsmitte des Motorgehäuses angreifende Abstüzung vorgesehen. Hierbei ist diese Abstützung allseits gelenkig mit dem Motorgehäuse gekoppelt, so daß ein Verschwenken des Motors außer in der durch das Gewicht bedingten Richtung in allen anderen Richtungen möglich ist.

Die WO-A- 88/04366 befaßt sich mit der Befestigung einer Strömungsmaschine an ihrem Aufstellort. Kierfür ist ein als gesondertes Teil ausgebildeter Gehäuseträger vorgesehen, der einerseits mit dem Gehäuse der Strömungsmaschine und andererseits mittels an ihm angeformter Füße mit einem die Strömungsmaschine tragenden Fundament verbindbar ist. Die Füße des Gehäuserahmens weisen eine relativ große flache Auflagefläche auf. Dies erfordert auch eine entsprechend ebene und glatte Ausbildung des Fundamentes, um eine einwandfreie Auflage der Füße auf dem Fundament zu erzielen. Am Gehäuse der Strömungsmaschine ist ein axial relativ weit vorstehender Lagerträger angeordnet. Dieser Lagerträger ist mittels eines weiteren Stützgliedes auf dem Fundament abgestützt.

Der Erfindung liegt die Aufgabe zugrunde, ein Pumpenaggregat der im Oberbegriff des Anspruches 1 beschriebenen Art so auszubilden, daß mit konstruktiv einfachen Mitteln das Auftreten von ein Schleifen des Laufrades verursachenden Biegespannungen verhindert ist.

Die Lösung der gestellten Aufgabe gelingt durch die im Kennzeichen des Anspruchs 1 angegebenen Merkmale. Durch die beschriebene Anordnung der Füße am Pumpengehäuse wird der Hebelarm für die die Biegespannung verursachenden Kräfte wesentlich verkürzt und somit die Biegespannung auf einen unschädlichen Wert reduziert. Weitere durch die Anbringung von Befestigungsvorrichtungen am Pumpen- und Motorgehäuse bei nichtplaner Auflage dieser Befestigungsvorrichtungen mögliche Biegespannungen werden durch die Ausgestaltung der am Pumpengehäuse vorgesehenen Füße mit einer Linienauflage unterbunden. Bei nichtebener Aufstellfläche oder nichtplaner Anordnung der Pumpen- und Motorbefestigungsvorrichtung kann das komplette Aggregat um die Linienauflage der am Pumpengehäuse vorgesehenen Füße kippen, so daß eine einwandfreie Auflage der beiden Befestigungsvorrichtungen ohne Verspannungen zwischen dem Pumpen- und Motorgehäuse erreicht wird. Wegen der Verbindung des Motorgehäuses mit dem Stützteil an nur einer Stelle und der Linienauflage der am Pumpengehäuse angeordneten Füße ist eine echte Dreipunkt-Auflage gegeben, die trotz bestehender Unebenheiten nach allen Seiten eine stabile Auflage ohne Verspannungen zwischen den beiden Gehäuse gewährleistet.

Die Linienauflage an den Füßen den Pumpengehäuses wird ohne jeglichen arbeitstechnischen Aufwand dadurch erreicht, daß die bei der Herstellung im Gießverfahren entstehende Gußnaht als Linienauflage an den Füßen belassen wird. Da die Fußflächen zu beiden Seiten der Gußnaht aus Entformungsgründen leicht ansteigend verlaufen, ist durch die Gußnaht eine einwandfreie Linienauflage gewährleistet.

Die Verdrehungssicherung zwischen dem Motorgehäuse und dem Stützteil wird auf einfache Weise dadurch erreicht, daß an dem Stützteil in axialem Abstand zur Verbindungsstelle ein zwischen die Kühlrippen des Motorgehäuses greifender Finger vorgesehen ist.

Anhand eines in der Zeichnung dargestellten Ausführungsbeispieles wird der Anmeldungsgegenstand nachfolgend näher beschrieben. Es zeigt:

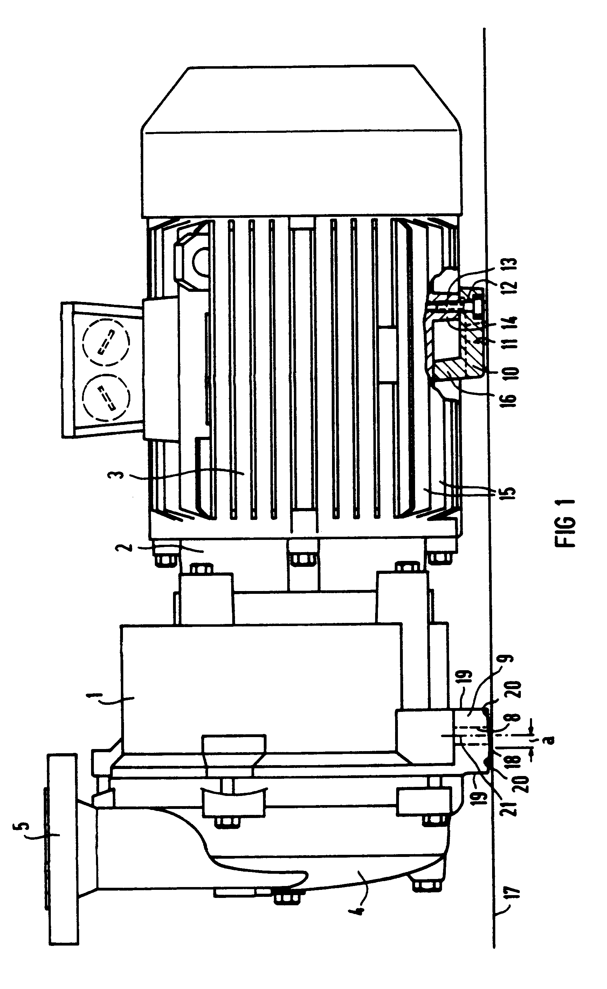

- FIG 1: eine Seitenansicht eines in Blockbauform ausgeführten Pumpenaggregates,

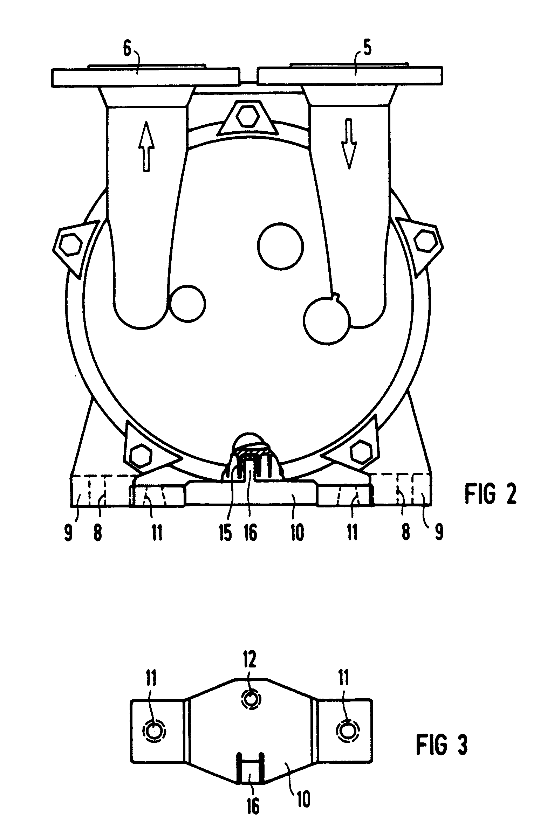

- FIG 2: eine Stirnansicht des in FIG 1 dargestellten Pumpenaggregates mit einem Aufbruch der Verbindungsstelle eines Stützteiles mit dem Motorgehäuse,
- FIG 3: ein Stützteil für das Motorgehäuse in Draufsicht.

Mit 1 ist das Gehäuse einer Flüssigkeitsringpumpe bezeichnet, das über ein Zwischenteil 2 starr mit dem Gehäuse 3 eines Antriebsmotors verbunden ist. Auf der dem Antriebsmotor gegenüberliegenden Seite ist das Pumpengehäuse 1 mit einem Gehäusedeckel 4 verschlossen, an dem je ein Saug- und Druckstutzen 5 und 6 für den Anschluß von Rohrleitungen angeformt ist. Am Gehäuse 1 der Flüssigkeitsringpumpe sind zu beiden Seiten mit Befestigungslöchern 8 versehene Füße 9 angeordnet.

Unterhalb des Motorgehäuses 3 ist ein Stützteil 10 mittig in Bezug auf den Umfang des Motorgehäuses 3 angeordnet. Dieses Stützteil 10 weist zwei seitlich zueinander beabstandete Befestigungslöcher 11 auf. Mittig zu diesen beiden Befestigungslöchern 11 ist an dem Stützteil 10 ein drittes Befestigungsloch 12 angebracht. Mittels einer durch dieses dritte Befestigungsloch 12 hindurchgeführten Schraube 13 ist das Stützteil 10 mit einem in der Umfangsmitte an der Unterseite des Motorgehäuses 3 vorgesehenen Ansatz 14 verbunden. Durch einen an dem Stützteil 10 angeformten und zwischen die Kühlrippen 15 des Motorgehäuses 3 greifenden Finger 16 sind das Motorgehäuse 3 und das Stützteil 10 gegen Verdrehen gesichert.

An der der Aufstellfläche 17 zugekehrten Unterseite weisen die am Pumpengehäuse 1 angeordneten Füße 9 eine Linienauflage 18 auf. Diese Linienauflage 18 ergibt sich durch gezieltes Zurücksetzen der sich von der Linienauflage 18 zu den Außenseiten 19 der Füße 9 hin erstreckenden Fußflächen 20. Es besteht aber auch die Möglichkeit, die im Gußverfahren hergestellten Füße 9 unbearbeitet zu lassen und die beim Gießen entstehende Gußnaht als Linienauflage 18 zu benutzen, zumal wegen der Entformbarkeit die Fußflächen 20 zu den Außenseiten 19 hin ohnehin leicht ansteigend ausgebildet sind. Somit wird ohne jeglichen fertigungstechnischen Aufwand die gewünschte Linienauflage 18 erreicht.

Die Lage der Linienauflage 18 kann mit der Mitte 21 der an den Füßen 9 vorgesehenen Befestigungslöcher 8 übereinstimmen. Günstiger ist es, wenn die Linienauflage 18 um ein geringes Maß a etwa bis zu einem Viertel der Fußbreite, zur Deckelseite des Pumpengehäuses 1 hin gegenüber der Befestigungslochmitte 21 verschoben ist. Beim Befestigen des Pumpenaggregates am Aufstellort wird dann eine Vorspannung erzeugt, durch die das Motorgehäuse 3 in Anlage an dem Stützteil 10 gehalten wird, so daß keine Vibrationsgeräusche entstehen können.

Die lagemäßige Anordnung der Füße 9 am Pumpengehäuse 1 sowie die beschriebene Ausbildung dieser Füße 9 und des dem Motorgehäuse 3 zugeordneten Stützteiles 10 ermöglichen eine Aufstellung des Pumpenaggregates auch auf nicht vollkommen planer Aufstellfläche 17 ohne daß es zu unerwünschten, ein Schleifen des Pumpenlaufrades verursachenden Biegespannungen kommt.

## Patentansprüche

1. Pumpenaggregat, bei dem die Pumpe und ihr Antriebsmotor in Blockbauform angeordnet sind und zur Befestigung des Aggregates am Aufstellort mindestens am Motorgehäuse (3) eine Befestigungsvorrichtung vorgesehen ist,
**dadurch gekennzeichnet,**
daß am Pumpengehäuse (1) eine aus zwei seitlich zueinander beabstandeten Füßen (9) bestehende Befestigungsvorrichtung am deckelseitigen Ende des Pumpengehäuses (1) angeordnet ist, wobei auf der der Aufstellfläche (17) zugewandten Unterseite der Füße (9) eine Linienauflage (18) durch Zurücksetzen der sich zu beiden Seiten dieser Linienauflage (18) axial erstrekkenden Fußflächen (20) gebildet ist, daß die Lage der Linienauflage (18) mit der Mitte (21) der in den Füßen (9) vorgesehenen Befestigungslöcher (8) übereinstimmt oder geringfügig zur Deckelseite hin gegenüber der Mitte (21) verschoben ist und daß ferner die Befestigungsvorrichtung des Motorgehäuses (3) aus einem verdrehungssicher an der Aufstellfläche (17) befestigbaren Stützteil (10) besteht, welches nur an einer Stelle verdrehungsgesichert mit einem an der Unterseite des Motors in dessen Umfangsmitte vorgesehenen Ansatz (14) verbunden ist.

2. Pumpenaggregat nach Anspruch 1,
**dadurch gekennzeichnet,**
daß die Linienauflage (18) durch die an der unbearbeitet belassenen Unterseite der Füße (9) bestehende Gußnaht gebildet ist.

3. Pumpenaggregat nach Anspruch 1 oder 2,
**dadurch gekennzeichnet,**
daß an dem Stützteil (10) in axialem Abstand zu seiner Verbindungsstelle mit dem Motorgehäuse (3) ein zwischen die Kühlrippen (15) des Motorgehäuses (3) greifender Finger (16) vorgesehen ist.

## Claims

1. Pump unit, in which the pump and its drive motor are arranged in a block construction and for the fastening of the unit on the mounting site a fastening device is provided at least on the motor housing (3), characterized in that there is arranged on the pump housing (1) a fastening device comprising two laterally spaced feet (9) on the cover-side end of the pump housing (1), whereby on the underside of the feet (9) facing the mounting face (17) there is formed a linear support (18) by the setting back of the feet faces (20) extending axially to both sides of this linear support (18), in that the position of the linear support (18) corresponds with the centre (21) of the fastening holes (8), provided in the feet (9), or is slightly displaced towards the cover side opposite the centre (21) and in that, moreover, the fastening device of the motor housing (3) comprises a support part (10) which can be irrotationally fastened to the mounting face (17), which support part is only connected to an attachment (14) provided on the underside of the motor in its circumferential centre at one point in such a way that it is secured against rotation.

2. Pump unit according to claim 1,
characterized in that the linear support (18) is formed by the cast seam existing at the underside of the feet (9) which is left unprocessed.

3. Pump unit according to claim 1 or 2,
characterized in that a finger (16) engaging between the cooling fins (15) of the motor housing (3) is provided on the support part (10) at an axial distance to its connection point with the motor housing (3).

## Revendications

1. Groupe de pompage, dans lequel la pompe et son moteur d'entraînement sont monobloc et dans lequel il est prévu, pour fixer le groupe au lieu d'installation, au moins un dispositif de fixation sur la carcasse du moteur (3),
caractérisé
en ce qu'il est prévu, sur le corps de la pompe (1) à l'extrémité de celui-ci (1) du côté du couvercle, un dispositif de fixation constitué de deux pieds (9) à distance latéralement l'un de l'autre, le côté inférieur des pieds, qui est tourné vers la surface de pose (17), formant un appui linéaire (18) par retrait des surfaces des pieds (20) s'étendant axialement de part et d'autre de cet appui linéaire (18), en ce que l'appui linéaire (18) coïncide en position avec le milieu (21) des trous (8) de fixation prévus dans les pieds ou est légèrement décalé vers le côté du couvercle par rapport au milieu (21) et en ce que, en outre, le dispositif de fixation de la carcasse du moteur (3) est constitué d'une pièce d'appui (109), qui peut être fixée sans possibilité de tourner à la surface de pose (17) et qui n'est reliée qu'en un point, sans possibilité de tourner, à un appendice (14) prévu sur le côté inférieur du moteur au milieu de son pourtour.

2. Groupe de pompage suivant la revendication 1,
caractérisé
en ce que l'appui linéaire (18) est formé par le cordon de coulée constitué sur le côté inférieur des pieds (9) laissé non usiné.

3. Groupe de pompage suivant la revendication 1 ou 2,
caractérisé
en ce que, sur la pièce d'appui (10), est prévu, à distance de son point de liaison avec la carcasse du moteur (3), un doigt (16) pénétrant entre les nervures de refroidissement (15) de la carcasse du moteur (3).
